# EUROPÄISCHE PATENTSCHRIFT

(11) **EP 2 145 793 B1**
(45) Veröffentlichungstag und Bekanntmachung des Hinweises auf die Patenterteilung: **23.03.2011**
(21) Anmeldenummer: 09090004.4
(22) Anmeldetag: 07.04.2009
(51) Int. Cl.: B60K 28/04

(54) **Verfahren und Vorrichtung zur Fahreranwesenheitserkennung**
Method and device for detecting the presence of a driver
Procédé et dispositif destinés à la reconnaissance de la présence d'un conducteur

(30) Priorität: 15.07.2008 DE 102008033722
(43) Veröffentlichungstag der Anmeldung: 20.01.2010
(73) Patentinhaber: VOLKSWAGEN AG, 38436 Wolfsburg (DE)
(72) Erfinder: Goss, Stefan, 31137 Hildesheim (DE); Katzwinkel, Reiner, 38527 Meine (DE)
(74) Vertreter: Patentanwälte Bressel und Partner

(56) Entgegenhaltungen:
- EP-A- 1 333 174
- WO-A-01/60254

## Beschreibung

Die Erfindung betrifft ein Verfahren und eine Vorrichtung zur Fahreranwesenheitserkennung.

Adaptive Geschwindigkeitsregelanlagen halten nicht nur die vom Fahrer eingestellte Wunschgeschwindigkeit konstant, sie reduzieren die Geschwindigkeit bei Bedarf in Abhängigkeit des Abstandes zum vorwegfahrenden Fahrzeug (Adaptiv Cruise Control). Entfernt sich das vorwegfahrende Fahrzeug, so beschleunigt das eigene Fahrzeug automatisch mit dem Ziel, die Wunschgeschwindigkeit des Fahrers wieder einzunehmen. Diese Systeme können als besonders wirksame Entlastung für den Fahrer wirken, wenn sie bis zum Stillstand stoppen und dann in Stausituationen bei Stop and Go aktiv die Fortbewegung regeln. Dabei besteht die Gefahr, dass der Fahrer im Stillstand das Auto verlässt, ohne das Fahrerassistenzsystem zu deaktivieren. Dann würde das Fahrzeug selbständig losfahren, wenn die entsprechende Situation eintritt.

Hybridfahrzeuge, die aus elektrischem Antrieb und Verbrennungsmotor bestehen, sollen gerade im Stadtverkehr den elektrischen Antrieb benutzen. Im Stillstand nimmt der Fahrer als eine Folge kein Motorengeräusch war. Steigt der Fahrer aus, ohne das Fahrzeug zu deaktivieren, würde das Fahrzeug in "Fahrbereitschaft" bleiben und unnötigen Strom verbrauchen.

Vorrichtungen zur Fahreranwesenheitskontrolle sind in verschiedenen Ausgestaltungen bekannt. Beispielsweise sind Sitzbelegungssensoren verschiedener Ausbildung bekannt. Eine solche Vorrichtung ist aus EP-A-1 333 174 bekannt. Eine weitere Möglichkeit zur Fahreranwesenheitserkennung ist eine Sensierung des Schaltzustandes des Gurtschlosses. Allerdings sind derartige Sensoren teuer und nicht in allen Fällen zuverlässig, beispielsweise wenn ein Gewicht auf dem Fahrersitz verbleibt.

Weiter sind Aufmerksamkeitsassistenzsysteme bekannt. Dabei handelt es sich um ein Fahrerassistenzsystem, das die Reaktion des Fahrers am Lenkrad misst. Fahrbahnunebenheiten, die auf die Vorderräder wirken, werden nicht zu 100 % gedämpft, sondern gelangen über Lenkgetriebe und Lenksäule teilgedämpft auf das Lenkrad. Bestehende Lenkwinkelsensoren werden unter anderem dazu verwendet, die Reaktion des Fahrers zu messen, die er unbewusst in Form eines Gegenlenkens der Lenkung aufprägt. Bleibt die erwartete Reaktion aus, ist dies ein Indiz dafür, dass der Fahrer entweder das Lenkrad unakzeptabel lange während der Fahrt losgelassen hat oder seine Aufmerksamkeit unakzeptabel gering ist. Der Aufmerksamkeitsassistent leitet aus dem Messergebnis Maßnahmen ab, beispielsweise akustisch, um die Aufmerksamkeit des Fahrers wieder zu steigern.

Der Erfindung liegt das technische Problem zugrunde, ein Verfahren und eine Vorrichtung zur Fahreranwesenheitserkennung zu schaffen, die sich mit einfachen technischen Mitteln implementieren lassen.

Die Lösung des technischen Problems ergibt sich durch die Gegenstände mit den Merkmalen der Patentansprüche 1 und 7. Weitere vorteilhafte Ausgestaltungen der Erfindung ergeben sich aus den Unteransprüchen.

Hierzu umfasst das Verfahren bzw. die Vorrichtung zur Fahreranwesenheitserkennung in einem Kraftfahrzeug mit mindestens einem Fahrzeugsystem, das bei stehendem Fahrzeug aktiv sein kann, mindestens einen Aktor, mittels dessen Prüf-Lenkmomente auf eine Lenkung aufgeprägt werden, und mindestens einen Lenkwinkelsensor, mittels dessen ein Handlenkmoment des Fahrers erfasst wird, wobei ein Stillstand des Fahrzeugs erfasst wird und die Fahrzeugsysteme des Fahrzeugs erfasst werden, die beim Stillstand aktiv sind und eine Anwesenheit erfordern, wobei dann ein Prüf-Lenkmoment durch den Aktor aufgeprägt wird und ein gegensteuerndes Handlenkmoment des Fahrers durch den Lenkwinkelsensor erfasst wird, wobei das aktive Fahrzeugsystem deaktiviert wird, wenn kein Handlenkmoment erfasst wird. Hierdurch wird verhindert, dass das Fahrzeugsystem selbsttätig das Fahrzeug in Bewegung setzt, obwohl kein Fahrer anwesend ist, wie dies beispielsweise bei ACC-Fahrerassistenzsystemen der Fall sein könnte. Dabei soll jedoch nicht generell ausgeschlossen sein, dass auch Ausführungsformen möglich sind, wo zunächst minimale Bewegungen des Fahrzeugs zugelassen werden, bevor das System deaktiviert wird, was später noch erläutert wird. Ebenso wird eine permanente Funktionsbereitschaft, wie beispielsweise bei einem Hybrid-Fahrzeug oder Elektro-Fahrzeug, die einen unnötigen elektrischen Energieverbrauch zur Folge hätte, vermieden. Der Aktor ist vorzugsweise ein Elektromotor, der auf eine Zahnstange ein Moment aufprägt. Bei Vorhandensein einer elektromechanischen Lenkung wird hierzu vorzugsweise der ohnehin bereits vorhandene Elektromotor und Lenkwinkelsensor verwendet, so dass kein zusätzlicher Hardware-Aufwand notwendig ist. Deaktivierung kann bedeuten, dass das Fahrzeugsystem abgeschaltet wird oder aber nur keine Aktionen durchgeführt werden. Die Prüf-Lenkmomente weisen dabei vorzugsweise geringe Amplituden auf, da es aus Realisierungen von Aufmerksamkeits-Assistenzsystemen bekannt ist, dass bereits kleinste Lenkmomente zu Fahrerreaktionen führen. Die Prüf-Lenkmomente können sprunghaft oder auch rampenförmig aufgeprägt werden.

Vorzugsweise wird vor dem Deaktivieren der Fahrer akustisch und/oder optisch gewarnt und weiter vorzugsweise zur Übernahme des Lenkrades aufgefordert. Somit wird verhindert, dass das Fahrzeugsystem deaktiviert wird, obwohl der Fahrer anwesend ist und nur seine Hände nicht am Lenkrad hatte. Die akustische Warnung erfolgt vorzugsweise über eine Sprachausgabe und die optische Warnung über eine Anzeigeeinrichtung, auf der vorzugsweise alphanumerisch und/oder piktogrammförmig der Fahrer gewarnt wird.

In einer weiteren bevorzugten Ausführungsform werden die Prüf-Lenkmomente wiederholt aufgeprägt. Dieser Zyklus kann sowohl periodisch sein als auch innerhalb eines gewissen Zeitrahmens zufällig geändert werden. Neben der Zeit können auch die Amplituden und/oder die Gradienten der Prüf-Lenkmomente variiert werden.

In einer weiteren bevorzugten Ausführungsform erfolgt das Aufprägen eines Prüf-Lenkmomentes, wenn eine Bedingung zur Beschleunigung des Fahrzeugs durch das Fahrzeugsystem vorliegt. Liegt keine Fahrer-Reaktion vor, wird das entsprechende System deaktiviert. Das ACC-Fahrerassistenzsystem wird dann beispielsweise das Fahrzeug nicht mehr anrollen lassen.

Alternativ kann vorgesehen sein, dass, wenn eine Bedingung zur Beschleunigung des Fahrzeugs durch das Fahrzeugsystem vorliegt, das Fahrzeug zunächst anfährt und anschließend die Prüflenkmomente aufgeprägt werden, wobei dann bei ausbleibender Reaktion das System deaktiviert wird. Dabei kann vorgesehen sein, dass das Fahrzeug eine vorgegebene Zeit oder Strecke bewegt wird, bevor die Prüflenkmomente aufgebracht werden. Werden Zeit oder Strecke ausreichend kurz gewählt, stellt die Bewegung des Fahrzeugs im Regelfall kein Problem dar. Der Vorteil ist, dass bei einer Bewegung des Fahrzeugs die Prüflenkmomente leichter spürbar aufgebracht werden können. Ein weiterer Vorteil ist, dass ein Kraftfahrzeugführer auch erst im Fall der Bewegung des Kraftfahrzeugs die Hände am Lenkrad haben muss, so dass dies dem realen Verhalten des Fahrers besser angepasst ist.

In einer weiteren bevorzugten Ausführungsform werden aufeinanderfolgende Prüf-Lenkmomente gegenläufig aufgeprägt, so dass die Ausrichtung der Räder nicht nachhaltig geändert wird.

Die Vorrichtung bzw. das Verfahren können dabei mit weiteren Vorrichtungen bzw. Verfahren zur Fahreranwesenheitserkennung kombiniert werden, beispielsweise mit einer Auswertung von Kamerabildern.

Die Ansteuerung und Auswertung erfolgt vorzugsweise durch ein Steuergerät, wobei ein separates Steuergerät vorgesehen ist. Vorzugsweise wird jedoch das Verfahren in ein vorhandenes Steuergerät implementiert, beispielsweise in ein Steuergerät der Fahrzeugsysteme und/oder in das Steuergerät für die elektromechanische Lenkung.

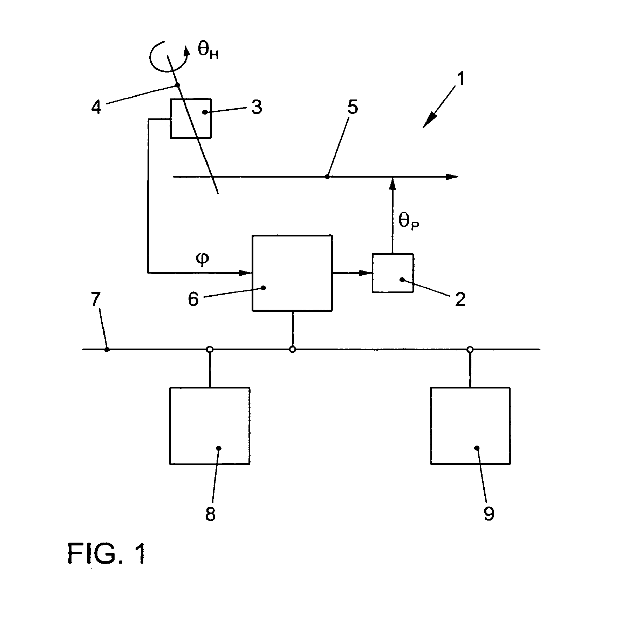

Die Erfindung wird nachfolgend anhand eines bevorzugten Ausführungsbeispiels näher erläutert. Die einzige Figur zeigt ein schematisches Blockschaltbild einer Vorrichtung zur Fahreranwesenheitserkennung.

Die Vorrichtung 1 zur Fahreranwesenheitserkennung in einem Kraftfahrzeug mit mindestens einem Fahrzeugsystem, das bei stehendem Fahrzeug aktiv sein kann, umfasst einen Aktor 2, mittels dessen Prüf-Lenkmomente θ_{P} auf eine Lenkung aufgeprägt werden können, und einen Lenkwinkelsensor 3, mittels dessen Handlenkmomente θ_{H} eines Fahrers erfasst werden. Das Handlenkmoment θ_{H} wird über eine Lenkstange 4 auf eine Zahnstange 5 übertragen. Ebenso prägt der Aktor 2 sein Prüf-Lenkmoment θ_{P} beispielsweise über ein Getriebe auf die Zahnstange 5 auf. Der Aktor 2, der vorzugsweise als Elektromotor ausgebildet ist, wird von einem Steuergerät 6 angesteuert. Das Steuergerät 6 erhält dabei die Lenkwinkel ϕ des Lenkwinkelsensors 3 übermittelt. Der Lenkwinkelsensor 3, der Aktor 2 und das Steuergerät 6 sind dabei gleichzeitig Bestandteil einer elektromechanischen Lenkung. Das Steuergerät 6 ist über einen Fahrzeugbus 7 mit einem Steuergerät 8 eines Fahrzeugsystems verbunden, das bei stehendem Fahrzeug aktiv sein kann. Das Fahrzeugsystem ist vorzugsweise als ACC-Fahrerassistenzsystem ausgebildet. Des Weiteren ist das Steuergerät 6 über den Fahrzeugbus 7 mit einer optischen und/oder akustischen Warneinrichtung 9 verbunden.

Über den Fahrzeugbus 7 erhalten die Steuergeräte 6, 8, 9 Daten von Sensoren und anderen Steuergeräten. Dabei erhält das Steuergerät 8 beispielsweise unter anderem die Geschwindigkeit V und den Abstand zu einem Objekt übermittelt. Des Weiteren übermittelt das Steuergerät 8 dem Steuergerät 6 den Zustand des ACC-Fahrerassistenzsystems als aktiv oder deaktiv.

Der Ablauf des Verfahrens kann sich dadurch unterscheiden, ob das nachfolgende Verfahren zyklisch oder ereignisorientiert erfolgt.

Bei der zyklischen Fahreranwesenheitserkennung erfasst das Steuergerät 6 den Zustand Fahrzeuggeschwindigkeit Null und aktives ACC-Fahrerassistenzsystem. Daraufhin erzeugt das Steuergerät 6 einen Steuerbefehl für ein Prüf-Lenkmoment θ_{P}, das vom Aktor 2 auf die Zahnstange 5 aufgeprägt wird. Über die Kupplung zwischen Zahnstange 5 und Lenkstange 4 kommt es zu einer spürbaren Momentenänderung an der Lenkstange 4 und somit am Lenkrad. Reagiert nun der Fahrer durch ein entgegensteuemdes Handlenkmoment θ_{H}, so wird dies durch den Lenkwinkelsensor erfasst und dem Steuergerät 6 übermittelt. Wird nun ein solches Handlenkmoment θ_{H} erfasst, so wertet das Steuergerät 6 dies als Anwesenheit des Fahrers. Bleibt hingegen ein solches Handlenkmoment θ_{H} aus, so bedeutet dies, dass der Fahrer nicht anwesend ist oder aber seine Hände nicht am Lenkrad hat. Daraufhin kann dann das Steuergerät 6 eine Warnmeldung an die Warneinrichtung 9 übermitteln und gegebenenfalls ein weiteres Prüf-Lenkmoment θ_{P} generieren. Bleibt erneut eine Reaktion des Fahrers aus, so wird an das Steuergerät 8 ein Steuerbefehl zur Deaktivierung übermittelt.

Alternativ oder ergänzend kann das Prüf-Lenkmoment erzeugt werden, wenn ausgehend von einem Ausgangszustand Fahrzeuggeschwindigkeit V = 0 und ACC-Fahrerassistenzsystem aktiv eine Zustandsänderung erfolgt (beispielsweise Abstand zu einem Objekt hat sich vergrößert), die eine Beschleunigung des Fahrzeugs zur Folge hätte. In diesem Fall wird vor der Beschleunigung des Fahrzeugs durch das Prüf-Lenkmoment θ_{P} die Anwesenheit des Fahrers erfasst. Wird keine Fahreranwesenheit erfasst (kein Handlenkmoment θ_{H}), so wird das Fahrzeug nicht beschleunigt und ein Steuerbefehl an das Steuergerät 8 übermittelt, um das ACC-Fahrerassistenzsystem zu deaktivieren.

Alternativ kann vorgesehen sein, dass, wenn eine Bedingung zur Beschleunigung des Fahrzeugs durch das Fahrzeugsystem vorliegt, das Fahrzeug zunächst anfährt und anschließend die Prüflenkmomente aufgeprägt werden, wobei dann bei ausbleibender Reaktion das System deaktiviert wird. Dabei kann vorgesehen sein, dass das Fahrzeug eine vorgegebene Zeit oder Strecke bewegt wird, bevor die Prüflenkmomente aufgebracht werden. Werden Zeit oder Strecke ausreichend kurz gewählt, stellt die Bewegung des Fahrzeugs im Regelfall kein Problem dar. Der Vorteil ist, dass bei einer Bewegung des Fahrzeugs die Prüflenkmomente leichter spürbar aufgebracht werden können. Ein weiterer Vorteil ist, dass ein Kraftfahrzeugführer auch erst im Fall der Bewegung des Kraftfahrzeugs die Hände am Lenkrad haben muss, so dass dies dem realen Verhalten des Fahrers besser angepasst ist.

## Patentansprüche

1. Verfahren zur Fahreranwesenheitserkennung in einem Kraftfahrzeug mit mindestens einem Fahrzeugsystem, das bei stehendem Fahrzeug aktiv sein kann, mittels mindestens eines Aktors (2), mittels dessen Prüf-Lenkmomente (θ_{P}) auf eine Lenkung aufgeprägt werden, und mindestens eines Lenkwinkelsensors (3), mittels dessen ein Handlenkmoment (θ_{H}) des Fahrers erfasst wird, umfassend folgende Verfahrensschritte:
a) Erfassen eines Stillstandes des Fahrzeugs,
b) Erfassen von Fahrzeugsystemen, die beim Stillstand aktiv sind und eine Anwesenheit des Fahrers erfordern,
c) Aufprägen eines Prüf-Lenkmoments (θ_{P}) durch den mindestens einen Aktor (2),
d) Erfassen eines gegensteuernden Handlenkmoments (θ_{H}) des Fahrers durch den mindestens einen Lenkwinkelsensor (3) und
e) Deaktivieren des aktiven Fahrzeugsystems, wenn kein Handlenkmoment (θ_{H}) erfasst wird.

2. Verfahren nach Anspruch 1, **dadurch gekennzeichnet, dass** vor dem Deaktivieren der Fahrer akustisch und/oder optisch gewarnt wird.

3. Verfahren nach Anspruch 2, **dadurch gekennzeichnet, dass** der Fahrer zur Übernahme des Lenkrades aufgefordert wird.

4. Verfahren nach einem der vorangegangenen Ansprüche, **dadurch gekennzeichnet, dass** der Verfahrensschritt c) zyklisch wiederholt wird.

5. Verfahren nach einem der vorangegangenen Ansprüche, **dadurch gekennzeichnet, dass** der Verfahrensschritt c) durchgeführt wird, wenn eine Bedingung zur Beschleunigung des Fahrzeuges durch das Fahrzeugsystem vorliegt.

6. Verfahren nach einem der vorangegangenen Ansprüche, **dadurch gekennzeichnet, dass** aufeinanderfolgende Prüf-Lenkmomente (θ_{P}) gegenläufig aufgeprägt werden.

7. Vorrichtung (1) zur Fahreranwesenheitserkennung in einem Kraftfahrzeug mit mindestens einem Fahrzeugsystem, das bei stehendem Fahrzeug aktiv sein kann, umfassend mindestens einen Aktor (2), mittels dessen Prüf-Lenkmomente (θ_{P}) auf eine Lenkung aufgeprägt werden, mindestens einen Lenkwinkelsensor (3) mittels dessen ein Handlenkmoment (θ_{H}) des Fahrers erfasst wird, sowie Mittel (6), die einen Stillstand des Fahrzeugs erfassen, wobei diese Mittel (6) auch Fahzeugsysteme erfassen, die beim Stillstand aktiv sind und eine Anwesenheit des Fahrers erfordern, wobei dann ein Prüf-Lenkmoment (θp) durch den Aktor (2) aufgeprägt wird und ein gegensteuerndes Handlenkmoment (θ_{H}) des Fahrers durch den Lenkwinkelsensor (3) erfasst wird, wobei die Mittel (6) das aktive Fahrzeugsystem deaktivieren, wenn kein Handlenkmoment (θ_{H}) erfasst wird.

8. Vorrichtung nach Anspruch 7, **dadurch gekennzeichnet, dass** vor dem Deaktivieren der Fahrer akustisch und/oder optisch gewarnt wird.

9. Vorrichtung nach Anspruch 7 oder 8, **dadurch gekennzeichnet, dass** der Fahrer zur Übernahme des Lenkrades aufgefordert wird.

10. Vorrichtung nach einem der Ansprüche 7 bis 9, **dadurch gekennzeichnet, dass** die Prüf-Lenkmomente (θp) zyklisch aufgeprägt werden.

11. Vorrichtung nach einem der Ansprüche 7 bis 10, **dadurch gekennzeichnet, dass** ein Prüf-Lenkmoment (θp) aufgeprägt wird, wenn eine Bedingung zur Beschleunigung des Fahrzeugs durch das Fahrzeugsystem vorliegt.

12. Vorrichtung nach einem der Ansprüche 7 bis 11, **dadurch gekennzeichnet, dass** aufeinanderfolgende Prüf-Lenkmomente (θp) gegenläufig aufgeprägt werden.

## Claims

1. Method for detecting the presence of a driver in a motor vehicle having at least one vehicle system which can be active when the vehicle is stationary, by means of at least one actuator (2) by means of which testing steering torques (θₚ) are impressed on a steering system, and at least one steering angle sensor (3) by means of which a manual steering torque (θ_{H}) of the driver is sensed, comprising the following method steps:
a) sensing of a stationary state of the vehicle,
b) sensing of vehicle systems which are active in the stationary state and require presence of the driver,
c) impressing of a testing steering torque (θ_{P}) by the at least one actuator (2),
d) sensing of a counter-steering manual steering torque (θ_{H}) of the driver by the at least one steering angle sensor (3), and
e) deactivation of the active vehicle system if no manual steering torque (θ_{H}) is sensed.

2. Method according to Claim 1, **characterized in that** the driver is warned audibly and/or visually before the deactivation.

3. Method according to Claim 2, **characterized in that** the driver is requested to take over the steering wheel.

4. Method according to one of the preceding claims, **characterized in that** the method step c) is repeated cyclically.

5. Method according to one of the preceding claims, **characterized in that** the method step c) is carried out if a condition for the acceleration of the vehicle by the vehicle system is met.

6. Method according to one of the preceding claims, **characterized in that** successive testing steering torques (θp) are impressed in opposite directions.

7. Device (1) for detecting the presence of a driver in a motor vehicle having at least one vehicle system which can be active when the vehicle is stationary, comprising at least one actuator (2) by means of which testing steering torques (θp) are impressed on a steering system, at least one steering angle sensor (3) by means of which a manual steering torque (θ_{H}) of the driver is sensed, and means (6) which sense a stationary state of the vehicle, wherein these means (6) also sense vehicle systems which are active in the stationary state and request presence of the driver, wherein a testing steering torque (θp) is impressed by means of the actuator (2), and a counter-steering manual steering torque (θ_{H}) of the driver is sensed by the steering angle sensor (3), wherein the means (6) deactivate the active vehicle system if no manual steering torque (θ_{H}) is sensed.

8. Device according to Claim 7, **characterized in that** the driver is warned audibly and/or visually before the deactivation.

9. Device according to Claim 7 or 8, **characterized in that** the driver is requested to take over the steering wheel.

10. Device according to one of Claims 7 to 9, **characterized in that** the testing steering torques (θp) are impressed cyclically.

11. Device according to one of Claims 7 to 10, **characterized in that** a testing steering torque (θp) is impressed if a condition for the acceleration of the vehicle by the vehicle system is met.

12. Device according to one of Claims 7 to 11, **characterized in that** successive testing steering torques (θₚ) are impressed in opposite directions.

## Revendications

1. Procédé pour détecter la présence d'un conducteur dans un véhicule automobile comprenant au moins un système de véhicule, qui peut être actif lorsque le véhicule est à l'arrêt, au moyen d'un actionneur (2) au moyen duquel des couples de direction de contrôle (θ_{P}) sont appliqués à une direction, et au moyen d'au moins un capteur d'angle de direction (3) au moyen duquel un couple de direction manuel (θ_{H}) du conducteur est détecté, comprenant les étapes de procédé suivantes :
a) détection d'un arrêt du véhicule,
b) détection de systèmes de véhicule qui sont actifs à l'arrêt et qui requièrent la présence du conducteur,
c) application d'un couple de direction de contrôle (θ_{P}) par l'au moins un actionneur (2),
d) détection d'un couple de direction manuel (θ_{H}) du conducteur, à commande opposée, par l'au moins un capteur d'angle de direction (3) et
e) désactivation du système de véhicule actif lorsqu'aucun couple de direction manuel (θ_{H}) n'est détecté.

2. Procédé selon la revendication 1, **caractérisé en ce que** le conducteur est averti par voie acoustique et/ou optique avant la désactivation.

3. Procédé selon la revendication 2, **caractérisé en ce que** le conducteur est invité à reprendre le volant.

4. Procédé selon l'une quelconque des revendications précédentes, **caractérisé en ce que** l'étape de procédé c) est répétée de manière cyclique.

5. Procédé selon l'une quelconque des revendications précédentes, **caractérisé en ce que** l'étape de procédé c) est mise en oeuvre lorsqu'il existe une condition d'accélération du véhicule par le système du véhicule.

6. Procédé selon l'une quelconque des revendications précédentes, **caractérisé en ce que** des couples de direction de contrôle successifs (θ_{P}) sont appliqués en sens contraire.

7. Dispositif (1) pour détecter la présence d'un conducteur dans un véhicule automobile comprenant au moins un système de véhicule, qui peut être actif lorsque le véhicule est à l'arrêt, comprenant au moins un actionneur (2), au moyen duquel des couples de direction de contrôle (θ_{P}) sont appliqués à une direction, au moins un capteur d'angle de direction (3) au moyen duquel un couple de direction manuel (θ_{H}) du conducteur est détecté, ainsi que des moyens (6) qui détectent un véhicule, ces moyens (6) détectant aussi des systèmes du véhicule qui sont actifs à l'arrêt et qui requièrent la présence du conducteur, un couple de direction de contrôle (θp) étant appliqué par l'actionneur (2) et un couple de direction manuel (θ_{H}) du conducteur, à commande opposée, étant détecté par le capteur d'angle de direction (3), les moyens (6) désactivant le système du véhicule actif lorsqu'aucun couple de direction manuel (θ_{H}) n'est détecté.

8. Dispositif selon la revendication 7, **caractérisé en ce qu'**avant la désactivation, le conducteur est averti par voie acoustique et/ou optique.

9. Dispositif selon la revendication 7 ou 8, **caractérisé en ce que** le conducteur est invité à reprendre le volant.

10. Dispositif selon l'une quelconque des revendications 7 à 9, **caractérisé en ce que** les couples de direction de contrôle (θp) sont appliqués de manière cyclique.

11. Dispositif selon l'une quelconque des revendications 7 à 10, **caractérisé en ce qu'**un couple de direction de contrôle (θp) est appliqué lorsqu'il existe une condition d'accélération du véhicule par le système de véhicule.

12. Dispositif selon l'une quelconque des revendications 7 à 11, **caractérisé en ce que** des couples de direction de contrôle (θ_{P}) successifs sont appliqués en sens contraire.
